# EUROPÄISCHE PATENTSCHRIFT

(11) **EP 3 368 264 B1**
(45) Veröffentlichungstag und Bekanntmachung des Hinweises auf die Patenterteilung: **25.05.2022**
(21) Anmeldenummer: 16735848.0
(22) Anmeldetag: 04.07.2016
(51) Int. Cl.: B29C 35/08, B29C 33/06, B30B 15/06

(54) **VULKANISATIONSVERFAHREN UND VORRICHTUNG**
VULCANISATION METHOD AND DEVICE
PROCÉDÉ DE VULCANISATION ET DISPOSITIF

(30) Priorität: 27.10.2015 DE 102015220974
(43) Veröffentlichungstag der Anmeldung: 05.09.2018
(73) Patentinhaber: ContiTech Luftfedersysteme GmbH, 30165 Hannover (DE)
(72) Erfinder: JANZ, Marcus, 30926 Seelze (DE); THIELE, Kristian, 99099 Hannover (DE); WOHLGEMUTH, Fabian, 30167 Hannover (DE)
(74) Vertreter: Continental Corporation
(86) Internationale Anmeldenummer: PCT/EP2016/065640
(87) Internationale Veröffentlichungsnummer: WO 2017/071838

(56) Entgegenhaltungen:
- EP-A1- 2 065 151
- US-A- 4 599 061
- US-A- 5 622 669
- US-A1- 2005 248 063

## Beschreibung

Die Erfindung betrifft ein Verfahren zur Vulkanisation von Körpern aus elastomerem Werkstoff, bei dem der zu vulkanisierender Rohling in einer den Rohling aufnehmenden metallischen Vulkanisationsform auf Vulkanisationstemperatur erwärmt wird. Ebenfalls ist eine Vorrichtung zur Durchführung des Verfahrens offenbart sowie besondere Anwendungen des Verfahrens.

Üblicherweise werden Produkte aus elastomerem Werkstoff unter Verwendung von heißem Dampf vulkanisiert. Dabei wird in einem Kesselhaus mit Hilfe eines Gasbrennersystems überhitzter Wasserdampf erzeugt und anschließend über ein weit verzweigtes Leitungssystem zu den Vulkanisationspressen in der Fabrik geleitet. An den Vulkanisationsanlagen/Vulkanisationspressen wird der Dampf zur Aufheizung der Vulkanisationsformen und deren Bestand- und Bauteile bzw. zum Spülen der Formteile verwendet. Die Erzeugung des Dampfs ist sehr teuer und durch das weit verzweigte Leitungssystem entstehen erhebliche Energieverluste, bevor der Dampf im eigentlichen Heizprozess ankommt. Hier ist es z.B. erforderlich, alle Leitungen zu isolieren, damit ausreichend thermische Energie im Prozess verbleibt.

Zudem sind die Rüstvorgänge bei den vielen unter Dampfdruck stehenden Vorgängen sehr zeitaufwendig und es fällt eine relativ hoher Aufwand für Reparatur und Instandhaltung an, da der Dampf alle Kontaktflächen angreift und z.B. Ventile, Kondensatoren etc. nach relativ kurzer Einsatzzeit überholt werden müssen. Auch bewegliche Leitungen, wie etwas Schläuche, unterliegen hohem Verschleiß. Auch sind die zur Reparatur und Instandhaltung erforderlichen Arbeiten aufgrund der Wärme und der schweren Ausführungen der Teile sehr aufwendig und nicht ganz ungefährlich.

Im Stand der Technik wurden daher bereits Lösungen zum Ersatz der aufwendigen Heißdampfvulkanisation durch andere Verfahren vorgeschlagen.

So offenbart die DE 881 848 bereits ein Verfahren zur Vulkanisation von Kunststoffen oder Kautschuk in einem hochfrequenten Wechselfeld, bei dem unterschiedliche elektrische Einrichtungen zur Erzeugung dieser Wechselfelder Überhitzungen des zu vulkanisierenden Produktes vermeiden sollen.

Die DE AS 1 054 229 zeigt ein Vulkanisationsverfahren von Bahnen aus Kautschuk auf einer Rolle bzw. in einem Wickel in einem hochfrequenten elektrischen Feld, bei dem zwischen den Bahnen ein Material mit anderen dielektrischen Kenngrößen als Kautschuk aufgewickelt ist.

Die DE 23 54 938 A1 offenbart ein Verfahren zur Herstellung von Schläuchen für Fahrzeugreifen, bei dem die Vulkanisationswärme durch elektro-induktive Mittel erzeugt wird und metallische Formteile erwärmt, die zwischen die Schläuche gelegt werden.

Diese zu der Dampfheizung alternativen Erwärmungsmethoden haben sich jedoch bisher schon allein aus dem Grunde nicht durchsetzen können, dass eine gleichmäßige und vollständige Durchwärmung der Kautschukprodukte nicht zufriedenstellend erreicht werden konnte.

EP2065151 A1 offenbart eine Vulkanisationseinrichtung für Reifen mit einer induktiven Heizung, bei der mehrere Heizspulen am oberen und unteren Rand und auch am Radius der Vulkanisationsform vorgesehen sind. Die üblicherweise schwierige Steuerung des magnetischen Flusses ist dadurch erleichtert, dass nicht magnetisierbare Leitungselemente und Abstandshalter auf den Seiten der Spulen angeordnet sind, auf denen dort befindliche metallische Elemente nicht durch Wirbelströme erhitzt werden sollen.

Für die Erfindung bestand also die Aufgabe, eine Alternative für die bisher mit Heißdampf arbeitende Vulkanisation und gleichzeitig ein Verfahren bereitzustellen, bei dem eine sichere Temperaturführung, ein einfacher Pressenaufbau, eine erleichterte Bedienbarkeit und ein wesentlich reduzierter Instandhaltungsaufwand erreicht werden kann.

Gelöst wird diese Aufgabe durch die Merkmale der Ansprüche 1, 5. Weitere vorteilhafte Ausbildungen sind in den Unteransprüchen offenbart.

Dabei erfolgt die Erwärmung des Rohlings durch Wärmeübertragung aus einer elektrisch induktiv erwärmten Vulkanisationsform, wobei die Erwärmung der Vulkanisationsform über mindestens zwei elektrisch gekoppelte und koaxial an den Enden der Vulkanisationsform angeordneten und von einem hochfrequenten Wechselstrom durchflossenen Kopplungsspulen, die einer Helmholtzspulenanordnung ähneln.

Helmholtzspulen sind eine besondere Spulenanordnung, bei der zwei Spulen in einem Abstand koaxial und im Wesentlichen parallel aufgestellt und gleichsinnig von Strom durchflossen sind. Der definierte Abstand entspricht dabei dem Radius einer Spule. Beide Spulen erzeugen unabhängig voneinander ein Magnetfeld, dessen Magnetfeldlinien sich um die Spulen herum wölben. Durch den geometrischen Abstand der Spulen zueinander ist es möglich, die Magnetfeldlinien zu überlagern bzw. zu koppeln. Durch die Überlagerung beider, durch den Stromfluss in der Spule entstehenden Magnetfelder, ergibt sich zwischen beiden Spulen ein Bereich mit weitgehend homogenem Magnetfeld.

Bei dem erfindungsgemäßen Verfahren ist dagegen der Abstand der beiden Spulen größer als der Radius einer Spule, so dass sich an sich kein homogenes Magnetfeld zwischen den Spulen ausbilden könnte. Erst wenn sich in diesem Feld ein metallischer Leiter befindet, wie z.B. eine metallische Vulkanisationsform für Luftfederrohlinge, werden die Magnetfeldinien zur Form geleitet, sodass sich innerhalb der Form ein nahezu homogenes Magnetfeld aufbaut. So erzeugt das von dem hochfrequenten Wechselstrom erzeugte Wechselfeld molekulare Schwingungen im Metall. Als Folge erhitzt sich die metallische Vulkanisationsform aufgrund molekularer Reibung. Die Intensität der Erwärmung ist dabei abhängig von den Werkstoffkennwerten.

Mit einer solchen Art der Erzeugung und Übertragung von Vulkanisationswärme entfallen die oben genannten und durch die üblicherweise im Stand der Technik genutzten Heißdampferwärmung entstehenden Handhabungs- und Instandhaltungsproblem vollständig. Zudem ergeben sich signifikante Einsparungen an Energiekosten, da die bei einer Dampfheizung durch das weit verzweigte Leitungs- und Ventilsystem auftretenden, kumulierten Energieverluste stark reduziert werden. Die benötigte Energie zur Beheizung der Vulkanisationsform wird direkt vor Ort erzeugt bzw. über normale Stromleitungen geführt. Aufgrund der hohen Wirkungsgrade elektrotechnischer Anlagen (in der Regel größer 95%), fallen nur sehr wenige Verluste an.

Aufwendige Wartungs- oder Reparaturarbeiten in regelmäßigen, teilweise sehr kurzen Zeitintervallen entfallen aufgrund des Verzichts auf Wasserdampf zur Beheizung der Vulkanisationsformen. Elektrotechnische Anlagen sind in der Regel sehr wartungsarm.

Bei der Induktionsheizung allgemein und auch bei der erfindungsgemäßen Verfahrensausbildung mit Kopplungsspulen sorgen die elektrischen Wirbelstromverluste für die Erwärmung. Wirbelstrom- und Hystereseverluste sind abhängig von der Strom-Durchlässigkeit des metallischen Werkstoffes und dessen Magnetisierungskoeffizienten (Permeabilität). Lässt der Werkstoff wenig Strom hindurch, bedeutet dies, dass ein großer Teil der mit Hilfe des Magnetfeldes eingebrachten Energie in molekulare Reibungshitze umgewandelt wird und die Form erwärmt. Wird ein geeigneter Werkstoff mit hoher Permeabilität und relativ niedrigem elektrischem Leitwert für die Vulkanisationsform ausgewählt, kann die benötigte elektrische Leistung verringert werden.

Außerdem weist das erfindungsgemäße Verfahren mit der beanspruchten Anordnung von Kopplungsspulen auch erhebliche Vorteile gegenüber der Anwendung von Ringinduktoren auf, mit denen man alternativ die Vulkanisationsform umgeben könnte. Für eine Anwendung von Ringinduktoren müssen speziell angefertigte Spulen für jede Vulkanisationsform gewickelt werden, während bei den erfindungsgemäß eingesetzten Kopplungsspulen im Wesentlichen vorgefertigte Spulen eingesetzt werden können die im Abstand und elektrischen Größen für eine Reihe von Vulkanisationsform gleichermaßen eingesetzt werden können. Darüber würde der Einsatz von Ringinduktoren die Konstruktion der Vulkanisationsform beeinflussen, also etwa dadurch dass die Vulkanisationsform ausschließlich nach einem Topf-Deckel-Prinzip gebaut werden müsste.

Das Verfarhren lässt sich erfindungsgemäß zur Vulkanisation von Hohlkörpern in Form von Luftfederbälgen einsetzen. Dabei wird ein zu vulkanisierender Balgrohling/Luftfederbalgrohling in einer den Balgrohling umgebenden metallischen Vulkanisationsform bis zur Anlage an deren Innenwand unter Innendruck gesetzt und durch Wärmeübertragung auf Vulkanisationstemperatur erwärmt wird. Durch die mit diesem Verfahren erreichbare besonders gleichmäßige Temperatur in der Vulkanisationsform und der entsprechend gleichmäßigen Wärmeübertragung lassen sich auch bei diesem Hohlkörper in hervorragender Weise Überhitzungen vermeiden und es ergibt sich eine vollständige und an allen Balgbereichen gleichmäßig durchvulkanisierte Materialmatrix.

Erfindungsgemäß sind Spulengeometrie, Strom, Windungszahlen und Abstand der koaxial an den Enden der Vulkanisationsform angeordneten Kopplungsspulen so ausgebildet, dass ein im Wesentlichen homogen ausgebildetes magnetisches Wechselfeld mit gradlinig über die Länge der Vulkanisationsform verlaufenden Magnetfeldlinien entsteht. Damit wird zum einen unterstützt, dass eine über die Länge der Vulkanisationsform im Wesentlichen gleiche Temperatur entsteht, und zum anderen eine Voreinstellung der Auslegung solcher Vulkanisationsanlagen möglich, bei der aus einer Vielzahl von Parametern eine bestmögliche Vorauswahl getroffen werden kann.

Eine vorteilhafte Ausbildung besteht darin, dass Teilbereiche der Vulkanisationsform oder Teile ihrer Umgebung durch magnetische Abschirmungen abgeschattet oder abgedeckt werden. Mit Hilfe solcher Abschirmungen kann das räumlich auftretende Magnetfeld eingedämmt und so die Erhitzung von metallischen Gegenstanden, insbesondere feinere, empfindlichere metallische Konstruktionen vor zu hoher Erwärmung geschützt werden.

Eine weitere vorteilhafte Ausbildung besteht darin, dass Stromstärke, die Stromfrequenz und die Spannung der Kopplungsspulen über einen Frequenzumrichter gesteuert sind. Dadurch ist es möglich, die Temperatur indirekt mit Hilfe der Induktion in den Spulen individuell einzustellen. Mit Hilfe eines Frequenzumrichters ist es möglich, die Stromstärke, die Stromfrequenz und die Spannung je nach Wunsch einzustellen. Rezeptverwaltungen, als z.B. auf eine Gummimischung angepasste Vulkanisationsabläufe, kurze Aufheizintervalle durch zeitlich nicht gleichmäßige Durchflutungs-Intensität, oder Intervall-Beheizung mit Temperaturüberwachung sind dann problemlos möglich.

Denkbar ist auch eine zeitgesteuerte, nicht konstante Beheizung der Vulkanisationsformen. Am Anfang eines Heizzyklus wird die Form konstant auf der bisherigen Temperatur gehalten. Ist die Vulkanisation an der äußeren Kontur der Gummiluftfeder erfolgt, kann nach und nach fein die Temperatur erhöht werden. So wird vermieden, dass der Kautschuk während der Vernetzung verbrennt. Sobald erste Vernetzungen Gummi an der Außenkontur erzeugt sind, kann die Temperatur erhöht werden und in Folge dessen die inneren Konturen schneller vulkanisiert werden.

Eine weitere vorteilhafte Ausbildung besteht darin, dass der Frequenzumrichter durch Sicherheitseinrichtungen in der elektrischen Schaltung einer zugehörigen Vulkanisationsanlage ansprechbar ist und beim Auslösen einer solchen Sicherheitseinrichtung die Stromzufuhr unterbricht. Notabschaltung sind hiermit problemlos möglich.

Besonders vorteilhaft lässt sich das erfindungsgemäße Verfahrens zur Vulkanisation von Reifenrohlingen in metallischen Vulkanisationsformen oder zur Vulkanisation von auf einer metallischen Formtrommel aufgewickelten oder in einer zylindrischen formgebenden Vulkanisationsform aufgenommenen Rohlingen für Antriebsriemen verwenden.

Dasselbe gilt für die Vulkanisation von Transportbändern bzw. Förderbändern, wobei die Bänder segment- bzw. längenweise vulkanisiert werden, indem das Transport- oder Förderband durch eine auf die Oberseite und die Unterseite des Förderbandes einwirkende und zustellbare flache Vulkanisationspresse vulkanisiert wird. Hier werden diese Bänder in langen Schüssen oder als Endlosband durch die Kopplungsspulen und die dazwischen liegenden metallischen Heizplatten der Vulkanisationspresse gefahren, die Heizplatten werden dann zugestellt und danach erwärmt. Nach Abschluss dieser partiellen Vulkanisation werden die Heizplatten geöffnet, das Band um etwa eine Heizplattenlänge vorgefahren und der Prozess beginnt von neuem. Die Kopplungsspulen sind hierbei natürlich im Wesentlichen rechteckig ober flachoval ausgebildet, entsprechend den flachen und an das Band angepassten Heizplatten der Vulkanisationspresse.

Bei diesen Anwendungen treten bei der bisherigen Verwendung von Heißdampf typischerweise dieselben Probleme auf wie bei dessen Verwendung zur Vulkanisation für Luftfederbälgen. Außerdem sind bei diesen Anwendungen die Vulkanisationsformen in aller Regel größer im Durchmesser und auch schwieriger in der Handhabung, so dass eine Alternative, wie sie beispielsweise mit Ringinduktoren gegeben wäre, hier ausscheidet und die Kopplungsspulen eine besonders gute und geeignete Lösung für die Aufgabe darstellen.

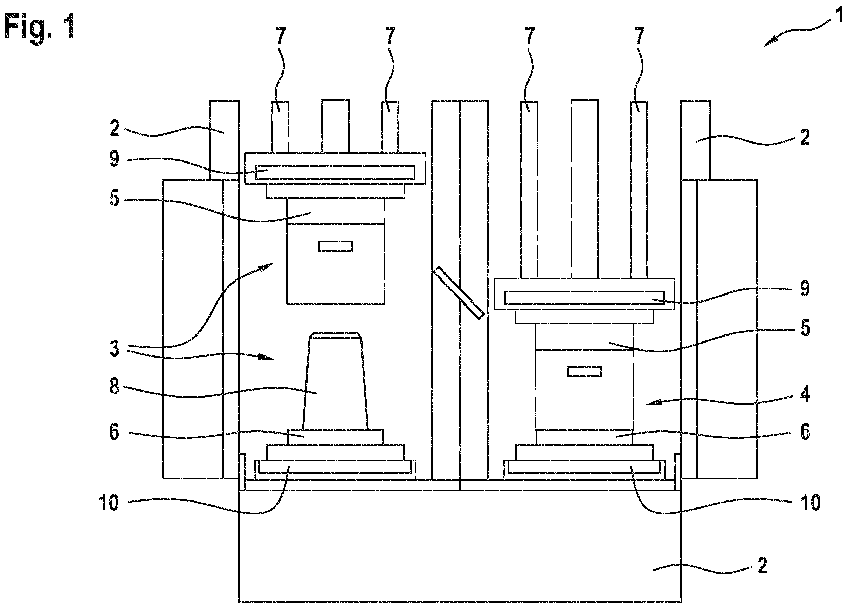

Anhand eines Ausführungsbeispiels, nämlich einer erfindungsgemäßen Vulkanisationspresse für die Vulkanisation von Luftfederrohlingen, soll die Erfindung näher erläutert werden. Die einzige Figur zeigt hierzu schematisch eine Vulkanisationspresse 1 zur Durchführung des Verfahrens, ausgelegt als Doppelpresse für die Vulkanisation von Luftfederrohlingen.

Die Presse weist dabei einen Maschinenrahmen 2 auf, in dem für jede der doppelt ausgelegten Vulkanisationsformen 3, 4 ein Oberteil 5 und ein entsprechendes Unterteil 6 ausgebildet sind. Die Oberteile 5 sind im Maschinenrahmen 2 verfahrbar angeordnet und werden jeweils mit Hilfe eines Pressenzylinders 7 bewegt. Die Unterteile 6 sind fest mit dem Maschinenrahmen verschraubt.

Die jeweiligen Oberteile 5 können damit in die auf der linken Seite dargestellte geöffnete Position der Vulkanisationsform 3 gefahren werden und in die auf der rechten Seite dargestellte geschlossene Position 4. In der geöffneten Position 3 wird der Rohling 8 des zu vulkanisierenden Luftfederbalgs eingelegt. Danach wird die Vulkanisationsform 3 geschlossen und die Vulkanisation des Luftfederrohlings, das heißt die Erwärmung der Vulkanisationsform kann beginnen. In einem solchen Zustand befindet sich beispielsweise die auf der rechten Seite gezeigte Vulkanisationsform 4.

Die Vulkanisationsformen 3 und 4 sind mit Einrichtungen versehen, die den Luftfederrohling in Berührungskontakt mit den Vulkanisationsformteilen bringen, nämlich mit hier nicht näher dargestellten Einrichtungen, mit denen der Luftfederrohling unter Innendruck gesetzt werden kann, so dass er sich nach dem Schließen der Presse an die Innenwand des jeweils hohlen topfförmig ausgebildeten Oberteils 5 der Vulkanisationsformen 3 und 4 anlegen kann.

Jeweils koaxial zum Ober- und Unterteil Vulkanisationsformen 3 und 4 sind an letzteren die Kopplungsspulen 9 und 10 angeordnet, nämlich eine Spule 9 am oberen Ende des jeweiligen Oberteils 5 der Vulkanisationsform und eine Spule 10 am unteren Ende des Unterteils 6.

Nach dem Schließen der Vulkanisationsform wird ein hochfrequenter Wechselstrom an die beiden Spulen 9 und 10 angelegt, der die Spulen gleichsinnig durchfließt.

Beide Spulen 9 und 10 erzeugen ein Magnetfeld, dessen Magnetfeldlinien sich so überlagern, dass zwischen beiden Spulen im Bereich der geschlossenen Vulkanisationsform 4 ein weitgehend homogenes Magnetfeld im Metall der Vulkanisationsform entsteht. Das von dem hochfrequenten Wechselstrom erzeugte Wechselfeld führt zur Erwärmung der Vulkanisationsform. Diese Wärme wird auf den in der Form befindlichen und an der Innenwand angelegten Luftfederrohling übertragen und für die gleichmäßige Vulkanisation genutzt.

Nicht näher dargestellt sind hierbei die Einrichtungen zur Steuerung und Energiezufuhr der Presse und zur Erzeugung eines hochfrequenten elektrischen Wechselstromes in den Kopplungsspulen, mit denen die hier nur schematisch dargestellte Doppelpresse natürlich versehen ist.

### Bezugszeichenliste

### (Teil der Beschreibung)

- 1: Vulkanisationspresse / Doppelpresse
- 2: Maschinenrahmen
- 3: Vulkanisationsform
- 4: Vulkanisationsform
- 5: Oberteil der Vulkanisationsform
- 6: Unterteil der Vulkanisationsform
- 7: Pressenzylinder
- 8: Luftfederrohling
- 9: Kopplungsspule
- 10: Kopplungsspule

## Patentansprüche

1. Verfahren zur Vulkanisation von Hohlkörpern in Form von Luftfederbälgen aus elastomerem Werkstoff, bei dem ein zu vulkanisierender Balgrohling (8) in einer den Balgrohling aufnehmenden und umgebenden metallischen Vulkanisationsform (3, 4) bis zur Anlage an deren Innenwand unter Innendruck gesetzt und durch Wärmeübertragung auf Vulkanisationstemperatur erwärmt wird, wobei die Erwärmung des Rohlings durch Wärmeübertragung aus einer elektrisch induktiv erwärmten Vulkanisationsform (3, 4) erfolgt, wobei die Erwärmung der Vulkanisationsform über mindestens zwei elektrisch gekoppelte und koaxial an den Enden der Vulkanisationsform angeordnete und von einem hochfrequenten Wechselstrom durchflossene Kopplungsspulen (9, 10) erfolgt, wobei Spulengeometrie, Strom, Windungszahlen und Abstand der koaxial an den Enden der Vulkanisationsform angeordneten Kopplungsspulen so ausgebildet sind, dass ein im Wesentlichen homogen ausgebildetes magnetisches Wechselfeld mit gradlinig über die Länge und innerhalb der Vulkanisationsform (3, 4) verlaufenden Magnetfeldlinien entsteht, wobei die Kopplungsspulen einer Helmholtzspulenanordnung ähneln und die Kopplungsspulen in einem Abstand angeordnet sind, der größer ist als Radius einer der Kopplungsspulen.

2. Verfahren nach Anspruch 1, bei dem Teilbereiche der Vulkanisationsform oder Teile ihrer Umgebung durch magnetische Abschirmungen abgeschattet oder abgedeckt werden.

3. Verfahren nach einem der Ansprüche 1 oder 2, bei dem Stromstärke, die Stromfrequenz und die Spannung der Kopplungsspulen (9, 10) über einen Frequenzumrichter gesteuert ist.

4. Verfahren nach Anspruch 3, bei dem der Frequenzumrichter durch Sicherheitseinrichtungen in der elektrischen Schaltung einer zugehörigen Vulkanisationsanlage ansprechbar ist und beim Auslösen einer solchen Sicherheitseinrichtung die Stromzufuhr unterbricht.

5. Vulkanisationspresse zur Durchführung des Verfahrens nach Anspruch 1 bis 4, welche folgende Einrichtungen und Merkmale aufweist:
a. einen Maschinenrahmen (2), in welchem ein Oberteil (5) und ein Unterteil (6) einer Vulkanisationsform (3, 4) zueinander verfahrbar aufgenommen sind, nämlich verfahrbar in eine voneinander beabstandete geöffnete Position und in eine geschlossene Position, insbesondere mit Hilfe eines Pressenzylinders (7),
b. wobei das Oberteil (5) und das Unterteil (6) zur Aufnahme eines zu vulkanisierenden Rohlings (8) aus elastomerem Werkstoff ausgebildet sind und ggf. Einrichtungen aufweisen, die den Rohling in Berührungskontakt mit den Vulkanisationsformteilen bringen,
c. wobei jeweils eine in Bezug auf eine gemeinsame Längsachse von Ober- und Unterteil koaxial zum Ober- und Unterteil angeordnete Kopplungsspule (9,10) am oberen bzw. außenseitigen Ende des Oberteils und am unteren bzw. außenseitigen Ende des Unterteils angeordnet ist, wobei die Kopplungsspulen einer Helmholtzspulenanordnung ähneln und die Kopplungsspulen in einem Abstand angeordnet sind, der größer ist als Radius einer der Kopplungsspulen,
d. sowie mit Einrichtungen zur Erzeugung, Steuerung und Regelung eines hochfrequenten energetischen Wechselfeldes zwischen den Kopplungsspulen versehen ist.

## Claims

1. Method for the vulcanization of hollow bodies in the form of air spring bellows made from elastomeric material, in the case of which method a bellows blank (8) to be vulcanized is placed in a metallic vulcanization mould (3, 4), which receives and surrounds the bellows blank, until contact with the inner wall of the said vulcanization mould (3, 4) under internal pressure, and is heated to vulcanization temperature by way of heat transfer, the heating of the blank taking place by way of heat transfer from an electrically inductively heated vulcanization mould (3, 4), the heating of the vulcanization mould taking place via at least two electrically coupled coupling coils (9, 10) which are arranged coaxially at the ends of the vulcanization mould and are flowed through by a high frequency alternating current, the coil geometry, current, number of windings and spacing of the coupling coils which are arranged coaxially at the ends of the vulcanization mould being configured in such a way that a substantially homogeneously configured alternating magnetic field is produced with magnetic field lines which run rectilinearly over the length and within the vulcanization mould (3, 4), the coupling coils being similar to a Helmholtz coil arrangement, and the coupling coils being arranged at a spacing which is greater than the radius of one of the coupling coils.

2. Method according to Claim 1, in the case of which part regions of the vulcanization mould or parts of its surroundings are shielded or covered by way of magnetic shielding means.

3. Method according to either of Claims 1 or 2, in the case of which the current strength, the current frequency and the voltage of the coupling coils (9, 10) is controlled via a frequency converter.

4. Method according to Claim 3, in the case of which the frequency converter can respond by way of safety devices in the electrical circuit of an associated vulcanization plant, and interrupts the current supply in the case of a safety device of this type being triggered.

5. Vulcanization press for carrying out the method according to Claims 1 to 4, which vulcanization press has the following devices and features:
a. a machine frame (2), in which an upper part (5) and a lower part (6) of a vulcanization mould (3, 4) are received such that they can be moved towards one another, namely can be moved into an open position, in which they are spaced apart from one another, and into a closed position, in particular with the aid of a press cylinder (7),
b. the upper part (5) and the lower part (6) being configured to receive a blank (8) to be vulcanized which is made from elastomeric material, and possibly having devices which bring the blank into touching contact with the vulcanization mould parts,
c. in each case one coupling coil (9, 10) which is arranged coaxially with respect to the upper part and lower part in relation to a common longitudinal axis of the upper part and lower part being arranged at the upper or outer-side end of the upper part and at the lower or outer-side end of the lower part, the coupling coils being similar to a Helmholtz coil arrangement, and the coupling coils being arranged at a spacing which is greater than the radius of one of the coupling coils,
d. and being provided with devices for generating, controlling and regulating a high frequency energetic alternating field between the coupling coils.

## Revendications

1. Procédé de vulcanisation de corps creux sous la forme de soufflets de suspension pneumatique en matériau élastomère, dans lequel une ébauche de soufflet à vulcaniser (8) est placée dans un moule de vulcanisation métallique (3, 4) recevant et entourant l'ébauche de soufflet jusqu'à l'application contre sa paroi intérieure sous une pression intérieure et est portée à une température de vulcanisation par transfert de chaleur, le chauffage de l'ébauche ayant lieu par transfert de chaleur à partir d'un moule de vulcanisation (3, 4) chauffé par induction électrique, le chauffage du moule de vulcanisation ayant lieu par l'intermédiaire d'au moins deux bobines de couplage (9, 10) couplées électriquement et agencées coaxialement aux extrémités du moule de vulcanisation et parcourues par un courant alternatif à haute fréquence, la géométrie des bobines, le courant, le nombre de spires et la distance des bobines de couplage agencées coaxialement aux extrémités du moule de vulcanisation étant configurés de telle sorte qu'un champ alternatif magnétique configuré sous forme essentiellement homogène est créé avec des lignes de champ magnétique s'étendant de manière rectiligne sur la longueur et à l'intérieur du moule de vulcanisation (3, 4), les bobines de couplage ressemblant à un agencement de bobines de Helmholtz et les bobines de couplage étant agencées à une distance qui est supérieure au rayon de l'une des bobines de couplage.

2. Procédé selon la revendication 1, dans lequel des zones partielles du moule de vulcanisation ou des parties de son environnement sont masquées ou recouvertes par des écrans magnétiques.

3. Procédé selon l'une quelconque des revendications 1 ou 2, dans lequel l'intensité du courant, la fréquence du courant et la tension des bobines de couplage (9, 10) sont commandées par un convertisseur de fréquence.

4. Procédé selon la revendication 3, dans laquelle le convertisseur de fréquence peut être actionné par des dispositifs de sécurité dans le circuit électrique d'une installation de vulcanisation associée et interrompt l'alimentation en courant en cas de déclenchement d'un tel dispositif de sécurité.

5. Presse de vulcanisation pour la réalisation du procédé selon les revendications 1 à 4, qui présente les dispositifs et caractéristiques suivants :
a. un bâti de machine (2), dans lequel une partie supérieure (5) et une partie inférieure (6) d'un moule de vulcanisation (3, 4) sont reçues de manière à pouvoir être déplacées l'une par rapport à l'autre, à savoir de manière à pouvoir être déplacées dans une position ouverte espacée l'une de l'autre et dans une position fermée, notamment à l'aide d'un cylindre de presse (7),
b. la partie supérieure (5) et la partie inférieure (6) étant configurées pour recevoir une ébauche à vulcaniser (8) en matériau élastomère et présentant éventuellement des dispositifs qui mettent l'ébauche en contact avec les parties du moule de vulcanisation,
c. une bobine de couplage (9, 10), agencée coaxialement aux parties supérieure et inférieure par rapport à un axe longitudinal commun des parties supérieure et inférieure, étant agencée respectivement à l'extrémité supérieure ou extérieure de la partie supérieure et à l'extrémité inférieure ou extérieure de la partie inférieure, les bobines de couplage ressemblant à un agencement de bobines de Helmholtz et les bobines de couplage étant agencées à une distance qui est supérieure au rayon de l'une des bobines de couplage,
d. et est pourvue de dispositifs pour la génération, la commande et la régulation d'un champ alternatif énergétique à haute fréquence entre les bobines de couplage.
